(19) Europäisches Patentamt
European Patent Office
Office européen des brevets

(11) **EP 0 826 901 B1**

(12) **EUROPEAN PATENT SPECIFICATION**

(45) Date of publication and mention
of the grant of the patent:
**05.02.2003 Bulletin 2003/06**

(51) Int Cl.[7]: **F16G 5/16**

(21) Application number: **97114915.8**

(22) Date of filing: **28.08.1997**

(54) **V-belt for high load transmission**

Schwerbelastbare Keiltreibriemen

Courroie trapézoidale de transmission pour fortes charges

(84) Designated Contracting States:
**DE FR GB IT**

(30) Priority: **29.08.1996 JP 22808496**
**17.12.1996 JP 33674296**

(43) Date of publication of application:
**04.03.1998 Bulletin 1998/10**

(73) Proprietor: **BANDO CHEMICAL INDUSTRIES,
LIMITED**
**Hyogo-ku Kobe-shi (JP)**

(72) Inventors:
• **Nonaka, Keizou, c/o Bando, Chemical Ind., Ltd
Hyogo-ku, Kobe-shi (JP)**
• **Ohkawa, Hirokazu, c/o Bando, Chemical Ind., Ltd
Hyogo-ku, Kobe-shi (JP)**
• **Takahashi, Mitsuhiko, Bando, Chemical Ind., Ltd
Hyogo-ku, Kobe-shi (JP)**

(74) Representative: **Gauger, Hans-Peter, Dipl.-Ing.
Müller, Schupfner & Gauger,
Maximilianstrasse 6
80539 München (DE)**

(56) References cited:
**EP-A- 0 014 492      EP-A- 0 135 710
FR-A- 2 242 608      JP-U- 3 062 251
JP-U- 62 162 431      US-A- 5 342 251**

• **PATENT ABSTRACTS OF JAPAN vol. 015, no.
049 (M-1078), 6 February 1991 & JP 02 283936 A
(MITSUBOSHI BELTING LTD), 21 November
1990,**
• **PATENT ABSTRACTS OF JAPAN vol. 016, no.
239 (M-1258), 2 June 1992 & JP 04 050535 A
(NISSAN MOTOR CO LTD), 19 February 1992,**

**Description**

This invention relates to a V-belt for high load transmission of the kind as defined by the preamble of independent claims 1 and 2 and used in belt power transmission devices, such as belt-type continuously variable speed transmissions in general-purpose agricultural machines and belt-type continuously variable speed transmissions in automobiles, such belts are composed of load carriers and a large number of blocks each having fitting parts for each fitting the load carrier therein and contact parts on the right and left sides for coming into contact with corresponding surfaces of a groove of a pulley.

Recently, for transmissions in agricultural machines such as combines and tractors and transmissions in automobiles, belt-type continuously variable speed transmissions have been developed in order to improve the operability of speed change and a fuel consumption rate.

A V-belt for high load transmission for use in the above transmissions is composed of endless load carriers and a large number of blocks each having fitting part for each fitting the load carrier therein and contact parts on the right and left sides for coming into contact with corresponding surfaces of a groove of a pulley, as disclosed in JP-A-60-49151 (first conventional example).

There is also known a technique for the purpose of improvements in strength and durability of each block made of resin material, as disclosed in JP-U-62-162 431 (second conventional example), in which a reinforcing member having a high coefficient of elasticity and a low coefficient of thermal expansion is embedded in a belt-lengthwise middle part of each block and the surface of each block is formed of a resin material layer. All of the features mentioned in the preamble of the independent claims 1 and 2 are shown in this document.

Further, there is proposed a technique for the purpose of damping down vibrations between the blocks of the V-belt to reduce noise, as disclosed in JP-U-3-62251 (third conventional example), in which a concave having an arcuate form in cross section is formed on one side surface of a centre pillar located at a belt-widthwise middle part of each block and on the pitch line of the belt, while a convex having an arcuate form in cross section is formed on the other side surface of each block so as to be fittable in the concave of the adjacent block. The front shapes of both the concave and convex are approximately rectangular.

Meanwhile, it is preferable that the above-mentioned V-belts have a maximum number of blocks because of ease winding around the pulley. When the V-belt is so arranged, however, the thickness of each block becomes small with respect to the belt-lengthwise direction thereby inducing decrease in strength and durability of each block. To cope with this, it is considered, as disclosed in the second conventional example, to embed a reinforcing member in each block and maximise the thickness of the reinforcing member with respect to the belt-lengthwise direction.

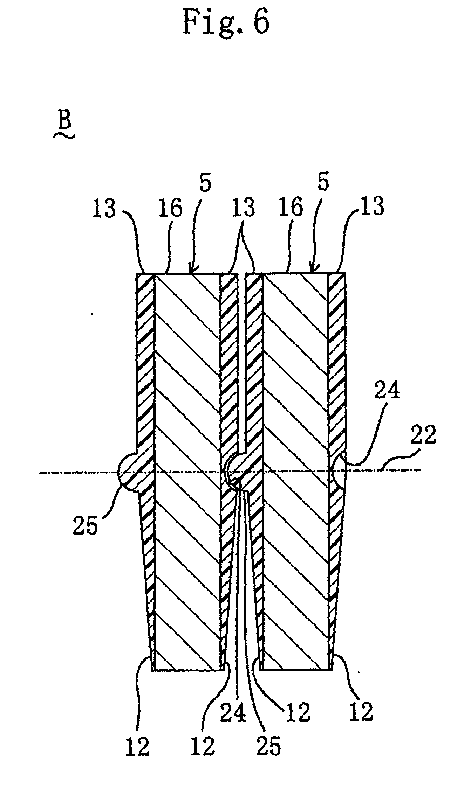

In the case where not only the thickness of the reinforcing member is increased with respect to the belt-lengthwise direction as mentioned above but also each block is provided with a concave and a convex each having an arcuate form in cross section to reduce noise as in the third conventional example, it is considered that the convex is formed in the resin material layer and the concave fittable in the convex of the adjacent block is formed not in the reinforcing member but only in the resin material layer (See Fig. 6).

In such a case, however, since the thickness of the resin material layer has been decreased with respect to the belt-lengthwise direction by an increase in size of the reinforcing member, the sizes of the convex and concave and a contact area between them are reduced. This lowers the shear strength of the convex. As a result, the convex may be chipped out at an early stage, thereby increasing noise production and lowering durability.

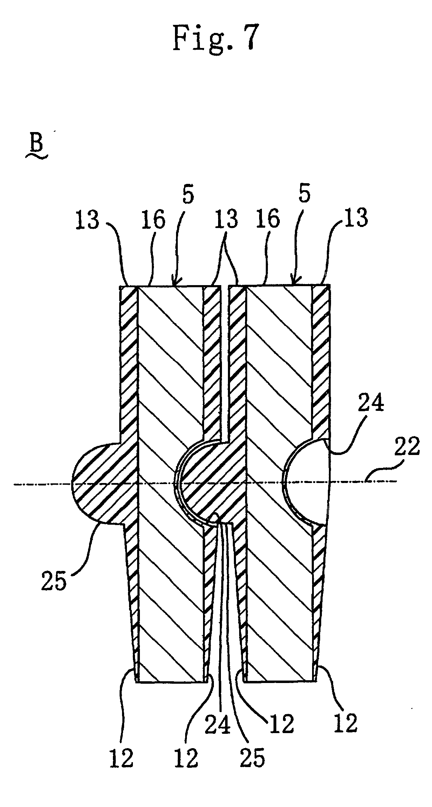

On the other hand, it is considered that the convex and concave are scaled up so that the concave is formed so as to reach the reinforcing member (See Fig. 7). In this case, although the convex can be prevented from being chipped out, the centre pillar is decreased in strength thereby breaking the block from the centre pillar. This occurs in either case, where the surface of the concave of the reinforcing member is covered with the resin material layer or not.

Further, in the case where the front shapes of the convex and concave are approximately rectangular as proposed in the third conventional example, this causes a problem that the convex is broken due to a torsion produced between the adjacent blocks. To cope with this, it can be considered to form the convex and concave in a half sphere. Also in this arrangement, depending on the sizes of the convex and concave, the convex is chipped out or the block is broken.

An object of the present invention is to improve the shapes of convex and concave of each block thereby ensuring the strength of the convex while preventing decrease in strength of a centre pillar even when the thickness of a resin material layer is reduced with respect to a belt-lengthwise direction due to the embedment of a reinforcing member, resulting in improvement in silentness and durability of a V-belt.

Further, when such a V-belt enters the pulley, the load carriers located on the pitch line of the belt enter the pulley groove without causing a slip on the groove surface of the pulley and each block enters the pulley groove at the same speed as in the load carriers, so that a speed difference occurs with respect to the groove surface of the pulley. In other words, since the pulley have a characteristic that a part thereof located farther from its rotational axis has a larger circumferential speed, each block enters the pulley groove in a state that a part of the block farther from the pitch line causes a larger slip. Accordingly, a part of each block above the load carriers receives, from the pulley, a backward force with respect to a running direction of the belt, while a part of the block under the load carriers receives, from the pulley, a forward force with respect to the running direction of the belt. As a result, the contact surfaces of the block are gradually worn out due to production of slip. In addition, also when the belt exits from the pulley, a slip occurs similarly.

Meanwhile, at right and left side parts near the contact surfaces of each block, the length (thickness) of the block along a radius of the pulley and parallel to the corresponding pulley surface is generally increased inward. Therefore, as the contact surface is worn out in a direction orthogonal to the groove surface of the pulley due to contact with the groove surface of the pulley, a part of the block newly in contact with the groove surface of the pulley varies with respect to the pitch line. This varies the circumferential speed difference between each block and the groove surface of the pulley when the block enters or exits from the pulley, resulting in changes over time of belt characteristics such as a belt sound, heat production and thrust balance.

Further, when a new contact surface of the block in contact with the groove surface of the pulley occurs at a part farther from the pitch line, a slip between the block and the groove surface of the pulley becomes larger, which further develops wear and increases changes over time of the belt characteristics.

**Disclosure of Invention**

To attain the object, in the present invention, a convex and a concave are formed in a truncated half sphere or a truncated cone only in a resin material layer, and an inclined surface is provided from a pitch line on a tip end surface of the convex toward an inner face of a belt in such a manner that its amount of projection from the surrounding of the convex is decreased toward the inner face of the belt.

More specifically, the present invention premises a V-belt for high load transmission which comprises a plurality of endless load carriers and a large number of blocks each having: a centre pillar at a middle part in a belt-widthwise direction; a plurality of fitting parts on both sides of the centre pillar for each fitting the load carrier therein; contact parts on both side surfaces for each coming into contact with the corresponding surface of a pulley groove; a reinforcing member at a middle part in a belt-lengthwise direction of the block; and a resin material layer formed on the surface of the block, each of the blocks having a concave formed on a pitch line of the belt and in the middle of one surface of the centre pillar and a convex formed on the other surface of the centre pillar in a manner of fittable in the concave of the adjacent block.

Further, the concave is formed only in the resin material layer and in the shape of a truncated half sphere that the diameter is decreased toward the bottom of the concave. The convex is formed in the resin material layer and in the shape of a truncated half sphere that the diameter is decreased toward the top of the convex. In addition, an inclined surface is formed at a part of the top surface of the convex from the pitch line toward an inner face of the belt so that an amount of projection of the convex from the surrounding of the convex is decreased toward the inner face of the belt.

In the above arrangement, since the concave is formed only in the resin material layer, there is no need for forming the concave in the reinforcing member embedded into each block. This ensures the strength of the centre pillar of each block thereby preventing a breakage of each block from the centre pillar. Further, since the convex and concave are formed in a truncated half sphere, the front shapes of the convex and concave are increased in size, which increases a contact area between the convex and concave. This results in preventing the convex from being chipped out, thereby enhancing durability. Furthermore, since both the front shapes of the convex and concave are circular, there is no breakage of the convex due to a torsion acting between the adjacent blocks. In addition, the inclined surface is formed on the top surface of the convex from the pitch line toward the inner face of the belt. If an inclination of the inclined surface is set at a suitable value according to the pulley diameter, the V-belt can be set on the pulley in a manner of winding it around the pulley while bending it. Thus, the above arrangement ensures the strength of the convex while preventing decrease in the strength of the centre pillar and improves silentness and durability of the V-belt.

The V-belt for high load transmission having the above-mentioned premise may be composed such that the concave is formed only in the resin material layer and in the shape of a truncated cone that the diameter is decreased toward the bottom of the concave, the convex is formed in the resin material layer and in the shape of a truncated cone that the diameter is decreased toward the top of the convex, and an inclined surface is formed at a part of the top surface of the convex from the pitch line toward an inner face of the belt so that an amount of projection of the convex from the surrounding of the convex is decreased toward the inner face of the belt.

In the above arrangement, when the thickness in the belt-lengthwise direction of the resin material layer is small, the truncated cones of the convex and concave can be assumed to be approximately identical with truncated half spheres. This presents the same operations and effects as in the first-mentioned arrangement.

The resin material layer is preferably made of high-strength lubricative resin material. Though the arrangement may cause a slide between the convex and concave when the belt is bent at the pulley thereby generating a wear between the convex and concave, it can concurrently reduce an amount of wear. Accordingly, the silentness and durability of the V-belt can be further enhanced.

**Brief Description of Drawings**

Fig. 1 is a partly cross-sectional view of a widthwise middle part of a V-belt for high load transmission according to Embodiment 1 of the invention, which shows a relation between a pair of convex and concave and a reinforcing member.

Fig. 2 is a perspective view showing a part of the V-belt for high load transmission according to Embodiment 1 of the invention.

Fig. 3 is a view showing a V-belt for high load transmission according to Embodiment 2 of the invention, which corresponds to Fig. 1.

Fig. 4 is a cross-sectional view showing a relation between a V-belt for high load transmission according to Embodiment 3 of the invention and a pulley.

Fig. 5 is a view showing the V-belt for high load transmission according to Embodiment 3 of the invention, which corresponds to Fig. 2.

Fig. 6 is a view showing Comparative Example 1 with regard to Fig. 1, this example being not in accordance with the present invention,

Fig. 7 is a view showing Comparative Example 2 with regard to Fig. 1, this example being not in accordance with the present invention,

Fig. 8 is a graph showing elongations of the V-belts for high load transmission after they are subjected to a durability test.

Fig. 9 is a graph showing wear amounts of blocks of the V-belts for high load transmission after they are subjected to a durability test.

Fig. 10 is a graph showing changes in generated tension with respect to a running time in the V-belts for high load transmission.

Fig. 11 is a graph showing changes in noise level with respect to a running time in the V-belts for high load transmission.

Fig. 12 is a graph showing changes in temperature with respect to a running time in the V-belts for high load transmission.

**Best Mode for Carrying Out the Invention**

Description will be made about embodiments of a V-belt for high load transmission of the present invention with reference to the drawings.

(Embodiment 1)

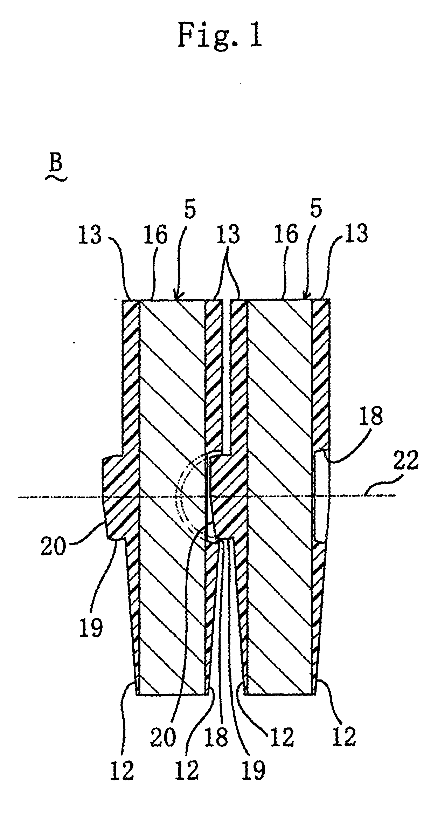

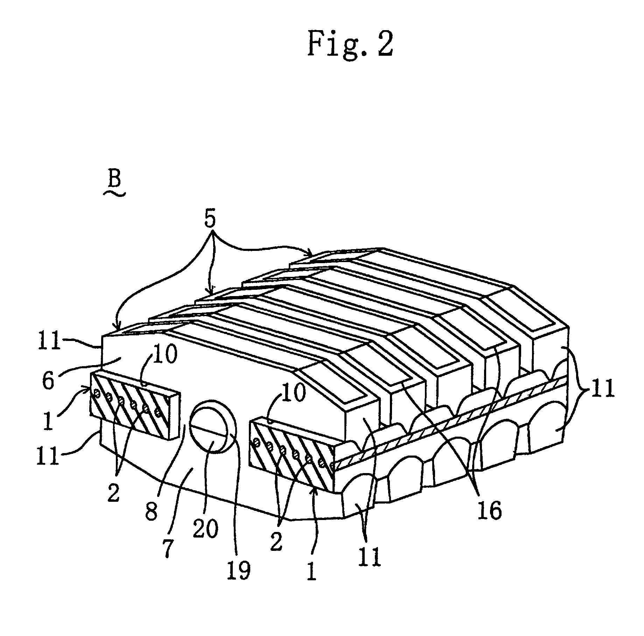

Figs. 1 and 2 show a V-belt B for high load transmission according to Embodiment 1 of the invention. The V-belt B consists of: two endless load carriers 1, 1 located on right and left sides of the belt and extending along a belt-lengthwise direction so as to be parallel with each other; and a large number of blocks 5, 5 arranged with specific pitches in the belt-lengthwise direction and engaged with the load carriers 1, 1. In each of the load carriers 1, cords 2, 2, extending along the belt-lengthwise direction are embedded at approximately uniform intervals in a belt-widthwise direction.

Each block 5 has a front shape like a letter H, and is composed of: an upper beam part 6 on a belt back face side, a lower beam part 7 on a belt inner face side; and a centre pillar 8 which is located at a middle part along the thickness of the belt and connects the upper and lower beam parts 6, 7. Between the upper and lower beam parts 6, 7 on right and left sides of the centre pillar 8, two fitting parts 10, 10 for fitting the load carriers 1, 1 therein are provided respectively. On right and left side surfaces of the upper and lower beam parts 6, 7, contact parts 11, 11 in contact with surfaces of a groove of an unshown V-pulley are formed respectively. The belt is decreased in width at the contact parts 11, 11 toward the belt inner face. Further, the belt is set such that an approximate middle point in a belt thickness direction (vertical direction in the figure) of the centre pillar 8 comes to a pitch line 22 of the belt. The entire upper beam part 6 and a part of the centre pillar 8 from the pitch line 22 toward the belt back face have an approximately uniform thickness in the belt-lengthwise direction. On the other hand, both side surfaces of the block are formed, at a part of the centre pillar 8 from the pitch line 22 toward the belt inner face and the entire lower beam part 7, into tapered surfaces 12, 12 so that the block thickness in the belt-lengthwise direction is decreased toward the belt inner face.

Each block 5 is generally made of high-strength lubricative resin material such as carbon short fibre-reinforced phenol resin. A reinforcing member 16 made of a material having a high coefficient of elasticity and a low coefficient of thermal expansion, such as aluminium alloy, is embedded in a middle part of the block along the length of the belt.

In other words, each block 5 has the reinforcing member 16 embedded in the middle part of the block along the length of the belt and resin material layers 13, 13 provided on the surface of the block. The reinforcing member 16 has a front shape like a letter H slightly smaller than that of the entire block 5 and has an approximate uniform thickness in the belt-lengthwise direction. The reinforcing member 16 occupies a large part of the block 5 with respect to the belt-lengthwise direction so that the thickness of the resin material layer 13 in the belt-lengthwise direction is extremely small.

In the middle of the centre pillar 8 of each block 5 on one side surface in the belt-lengthwise direction of the block 5, a concave 18 is formed on the pitch line 22. On the other hand, on the other side surface in the belt-lengthwise direction of the block 5, a convex 19 is formed so as to be fittable in the concave 18 of the adjacent block 5. The concave 18 is formed only in the resin material layer 13 and has the shape of a truncated half sphere that the diameter is decreased toward the bottom of the concave 18. Accordingly, the concave 18 is not formed in the reinforcing member 16. The convex 19 is formed in the resin material layer 13 and has a shape corresponding to that of the concave 18, i.e., the shape of a truncated half sphere that the diameter is decreased toward the top of the convex 19. In each of the concave 18 and convex 19, a centre line of the truncated half sphere (a centre line along the thickness of the belt) is matched with the pitch line 22. The opening diameter of the concave 18 is approximately matched with a diameter of a half sphere part (shown in an imaginary line in Fig. 1) of the concave 18. The diameter of the base end of the convex 19 is approximately matched with a diameter of a half sphere part (shown in an imaginary line in Fig. 1) of the convex 19.

At a part of the top surface of the convex 19 from the pitch line 22 toward a belt inner face, an inclined surface 20 is formed so that an amount of projection of the convex 19 from the surrounding of the convex 19 is decreased toward the belt inner face. The formation of the inclined surface 20 and the tapered surfaces 12, 12 of the lower beam part 7 and the centre pillar 8 allows the V-belt B to be wound around the pulley in a bent state. In detail, the inclined surface 20 is formed so as to satisfy the following relationship:

$$\alpha > 360° \div (\pi \times d \div p)$$

wherein $\alpha$ is an inclination of the inclined surface 20 with respect to a belt thickness direction, d is a minimum pulley diameter and p is a block pitch.

According to the present embodiment, since the concave 18 is formed only in the resin material layer 13 of the block 5, there is no need for forming a concave in the reinforcing member 16 embedded in each block 5. This sufficiently ensures the strength of the centre pillar 8 thereby preventing each block 5 from breaking at the centre pillar 8. Since both the concave 18 and the convex 19 are shaped in a truncated half sphere, increases in size of both the front shapes of the concave 18 and the convex 19 increase a contact area between the concave 18 and the convex 19. This prevents the convex 19 from chipping out, thereby increasing durability. Further, since both the front shapes of the concave 18 and the convex 19 are circular, this causes no breakage of the convex 19 due to a torsion generated between the adjacent blocks 5, 5. Furthermore, since the inclined surface 20 is provided at a part on the top surface of the convex 19 from the pitch line 22 toward the belt inner face and the inclination thereof is set at a suitable value according to the pulley diameter, the V-belt B can be wound around the pulley so as to be smoothly bent. As a result, even if the thickness of the resin material layer 13 in the belt-lengthwise direction is small, the strength of the convex 19 can be kept while preventing decrease in strength of the centre pillar 8, and the silentness and the durability of the V-belt B can be enhanced.

When the V-belt B is bent at the pulley, the concave 18 and the convex 19 slide on each other thereby causing wear. However, since the resin material layer 13 is made of high-strength lubricative resin material, amounts of wear of the concave 18 and the convex 19 can be reduced, which further enhances silentness and durability of the V-bent B.

(Embodiment 2)

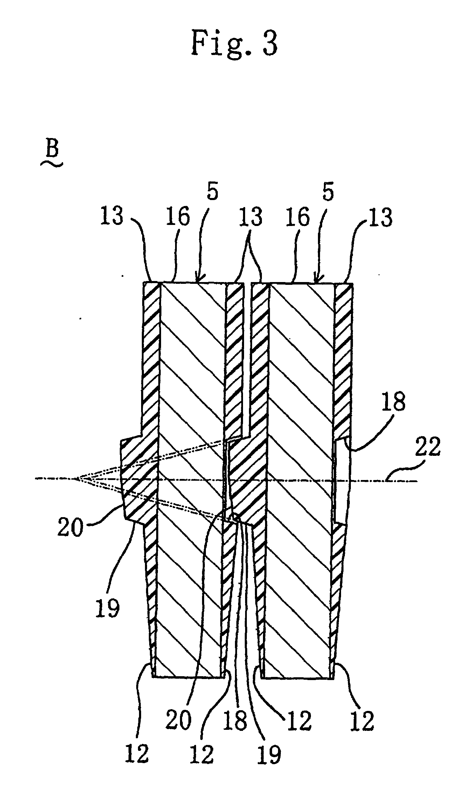

Fig. 3 shows a V-belt for high load transmission according to Embodiment 2 of the present invention. In the present embodiment, both the shapes of the concave 18 and the convex 19 are different from those of Embodiment 1. In the present embodiment, same parts as in Fig. 1 are referred to as same reference marks and will be not described in detail, and only different parts will be described.

In the present embodiment, the concave 18 is formed only in the resin material layer 13 and is shaped in a truncated cone that the diameter is decreased toward the bottom of the concave 18. The convex 19 is formed in the resin material layer 13 and is shaped in a truncated cone that the diameter is decreased toward the top of the convex 19. The opening diameter and the depth of the concave 18, the diameter of the base end and an amount of projection of the convex 19, and the inclination of the inclined surface 20 are approximately equal to those of Embodiment 1. Since the thickness in the belt-lengthwise direction of the resin material layer 13 is small, both the shapes like a truncated cone of the concave 18 and the convex 19 are approximately identical with the shapes like a truncated half sphere in Embodiment 1. The shapes like a truncated cone are shown in imaginary lines in the figure. Accordingly, this embodiment can also obtain the same operations and effects as in Embodiment 1.

(Embodiment 3)

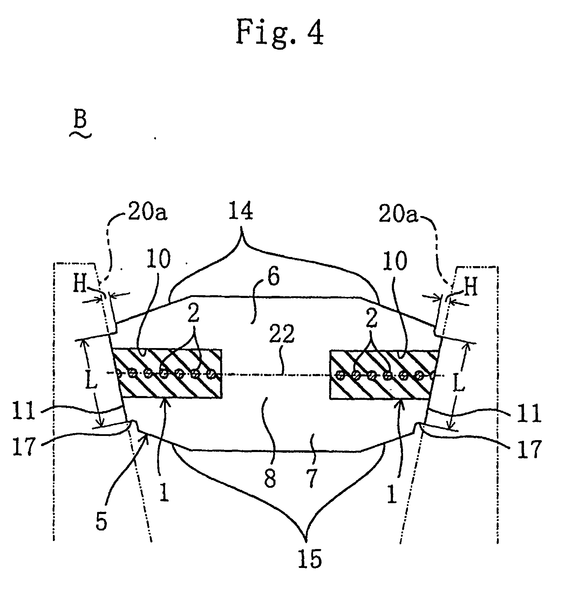

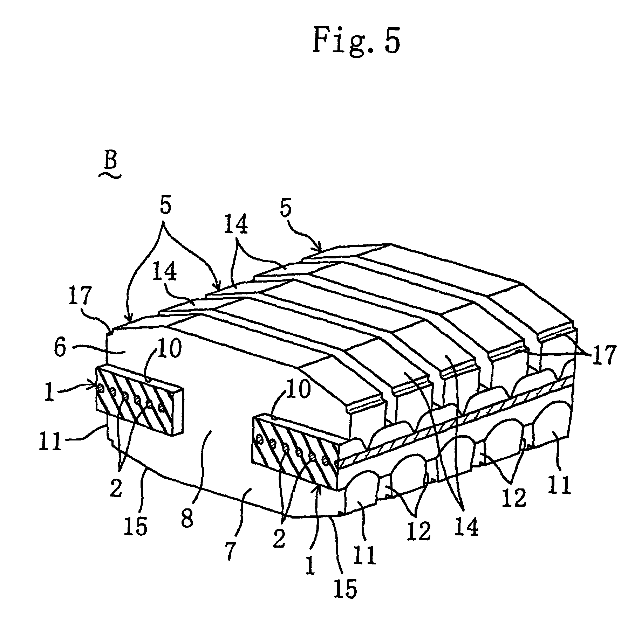

Figs. 4 and 5 show a V-belt for high load transmission according to Embodiment 3 of the present invention. The V-belt B is composed of two endless load carriers 1, 1 located on right and left sides of the belt and a large number of blocks 5, 5, ... arranged with specific pitches in a belt-lengthwise direction. In each of the load carriers 1, cords 2, 2, ... extending along the belt-lengthwise direction are embedded at approximately uniform intervals in a belt-widthwise direction.

Each block 5 has a front shape like a letter H, and is composed of: an upper beam part 6 on a belt back face side; a lower beam part 7 on a belt inner face side; and a centre pillar 8 which is located at a middle part along the thickness of the belt (in a vertical direction in the figure) and connects the upper and lower beam parts 6, 7. Between the upper and lower beam parts 6, 7 on right and left sides of the centre pillar 8, two fitting parts 10, 10 for fitting the load carriers 1, 1 therein are provided respectively.

On right and left side parts of the top surface of the upper beam part 6 of each block 5, inclined surfaces 14, 14 downwardly inclining toward right and left ends are formed, respectively. On the other hand, on right and left side parts of the bottom surface of the lower beam part 7 of each block 5, inclined surfaces 15, 15 upwardly inclining toward right and left ends are formed, respectively. On right and left ends of each block 5, projections 17, 17 are respectively formed which each extend in a direction orthogonal to the corresponding surface 20a of the groove of the V-pulley around which the belt B is to be wound and each have an approximately uniform length L along a radius of the pulley and parallel to the corresponding surface 20a of the pulley groove. At the top ends of the projections 17, contact surfaces 11 in contact with the groove surfaces 20a of the pulley are formed, respectively. This prevents contact surface 11 side ends of the inclined surfaces 14, 15 from contacting the groove surfaces 20a of the pulley, respectively.

The height H of the projection 17 in the direction orthogonal to the groove surface 20a of the pulley is set such that the projection 17 is worn away due to contact with the groove surface 20a of the pulley immediately before the belt life time, such as a time of belt breakage and a time of block breakage, predetermined through tests and so far.

At upper and lower base ends of the projection 17, slightly arcuate surfaces are formed respectively under constraints of formation. However, even in the parts, it can be considered that the length along a radius of the pulley and parallel to the corresponding groove surface 20a of the pulley is approximately uniform.

Next, a description is made about the case that the V-belt B for high load transmission having the above arrangement is wound between two pulleys, and is run. When the V-belt B enters each pulley, the load carriers 1, 1 located on the pitch line 22 of the V-belt B enter the groove surfaces 20a of the pulley without slip. On the other hand, since each block 5 enters the groove surfaces 20a of the pulley at the same speed as in the load carriers 1, 1, a part of the block farther from the pitch line 22 causes a large slip on the groove surface 20a.

Thereby, in each block 5, the upper beam part 6 above the load carriers 1, 1 receives a backward force with respect to the belt running direction from each pulley and the lower beam part 7 below the load carriers 1, 1 receives a forward force with respect to the belt running direction from each pulley. The contact surface 11 of each block 5 is worn out in a direction perpendicular to the groove surface 20a of each pulley due to slip on the groove surface 20a. Also when each block 5 exits from each pulley, the above slip occurs as in the case of entrance of the block 5. Accordingly, if the inclined surfaces 14, 15 on the top and bottom surfaces of the upper and lower beam parts 6, 7 are each formed so as to extend the corresponding groove surface 20a of each pulley so that its end on the contact surface 11 side is brought into contact with the groove surface 20a of the pulley, a new contact surface in contact with the groove surface 20a occurs at a position further away from the pitch line 22 due to the inclined surfaces 14, 15. This increases a circumferential speed difference between each block 5 and the groove surface 20a of each pulley when the block 5 enters and exits from the pulley, so that a slip between the block 5 and the groove surface 20a becomes larger, thereby accelerating wear.

On the other hand, in the present embodiment, the contact surfaces 11 are formed at top ends of the projections 17 which each extend in a direction orthogonal to the corresponding groove surface 20a of the pulley and each have an approximately uniform length along a radius of the pulley and parallel to the corresponding groove surface 20a of the pulley, respectively. Accordingly, a distance between the pitch line 22 and a new contact part of the block with the groove surface 20a due to wear is not changed between before and after the contact surface is worn out, so that a circumferential speed difference between the block 5 and the groove surface 20a of the pulley is constant. As a result, changes over time of belt characteristics such as a belt sound, heat production and thrust balance can be suppressed with a simple structure.

Further, in the present embodiment, the height H of each projection 17 in the direction orthogonal to the groove surface 20a of the pulley is set such that the projection 17 is worn away immediately before the predetermined life time of the V-belt B. Accordingly, after each projection 17 is worn away, a part of the block 5 newly in contact with the groove surface 20a of the pulley comes to a position farther away from the pitch line 22 so that the belt characteristics abruptly change. By recognising such a change, it can be judged that the V-belt B reaches its life time. This makes it possible to replace the worn V-belt B with a new one. As a result, the V-belt B can be effectively used without breakage until its life time comes.

Next, concrete examples of the present invention are described.

For Embodiments 1 and 2, 2017 aluminium alloy regulated in the Japanese Industrial Standards (JIS) H4000 is used as a reinforcing member 16 of each block 5 and carbon short fibre-reinforced phenol resin is used as high-strength lubricative resin material. The length in the belt-lengthwise direction of each block 5 and the length in the belt-lengthwise direction of the reinforcing member 16 are 2.95 mm and 2.0 mm, respectively. The width of the centre pillar 8 of each block 5 is 4.0 mm, the belt width on the pitch line 22 is 25 mm, and the block pitch p is 3.0 mm. In the conditions, two kinds of V-belts B, B for high load transmission are produced. One of the V-belts B, B has concave 18 and convex 19 formed in the resin material layer 13 in the shape of a truncated half sphere (Invention Example 1). The other has concave 18 and convex 19 formed in the resin material layer 13 in the shape of a truncated cone (Invention Example 2). The sizes of the concaves 18 and convexes 19 of the V-belts B, B of Invention Examples 1 and 2 are set as shown in Table 1. An inclination of the inclined surface 20 provided on the top surface of each convex 19 from the pitch line 22 toward the belt inner face is 7.5°.

For comparison, as shown in Figs. 6 and 7, two kinds of V-belts (Comparative Examples 1 and 2) are produced by using blocks 5 with a concave 24 and a convex 25 each having the shape of a perfect half sphere. In Comparative Example 1 shown in Fig. 6, a concave 24 capable of fitting in a convex 25 of the adjacent block 5 is formed only in the resin material layer 13. On the other hand, in Comparative Example 2 shown in Fig. 7, the sizes of the concave 24 and convex 25 are larger than those of Comparative Example 1, and a concave formation on the surface of the reinforcing member 16 through punching is followed by resin moulding so that the concave 24 capable of fitting in the convex 25 of the adjacent block 5 is formed. The sizes of the concave 24 and convex 25 are also shown in Table 1.

Invention Examples 1 and 2 and Comparative Examples 1 and 2 are subjected to tests for checking the durability to high load and the noise level. In the high-load durability test, each V-belt is wound between a drive pulley of a 120 mm diameter and a driven pulley of a 60 mm diameter and is rotated at 6000 rpm under a load of 5 kg of the driven pulley, in order to measure a time for breakage of each of the convexes 19, 25. In the noise level test, while each V-belt is subjected to the above high-load durability test, its noise level is measured three times, i.e., at an early stage of running, after a lapse of 100 hours running and after a lapse of 200 hours running.

Results of the tests are shown in Table 1. As is apparent from Table 1, Invention Examples 1 and 2 are excellent in durability to high load and noise level after running as compared with Comparative Examples 1 and 2.

Table 1

| | | Invention Ex. | | Comparative Ex. | |
|---|---|---|---|---|---|
| | | 1 | 2 | 1 | 2 |
| Diameter of convex base end (mm) | | 1.8 | 1.8 | 0.8 | 1.8 |
| Height of convex (mm) | | 0.4 0.4 | 0.4 0.4 | 0.4 0.4 | 0.9 0.9 |
| Diameter of concave opening (mm) | | 2.0 | 2.0 | 0.9 | 2.0 |
| Depth of concave (mm) | | 0.45 | 0.45 | 0.45 | 1.0 |
| Durability to high load | | No defect after 500h running | No defect after 500h running | convex breakage after 10h running, belt breakage after 170h running | centre pillar breakage after 250h running |
| Noise level (dB) | early stage | 73 | 74 | 73 | 73 |
| | 100h after | 83 | 83 | 100 | 85 |
| | 200h after | 87 | 88 | - | 88 |

For Embodiment 3, there is produced a V-belt B for high load transmission (Invention Example) in which the height of each projection 17 in a direction orthogonal to the groove surface 20a of the pulley is set at 0.3 mm. Further, as Comparative Example, there is produced a V-belt for high load transmission which has no projections 17, 17 of the present invention and in which the inclined surfaces 14, 15 located on the top surface of the upper beam part 6 and the bottom surface of the lower beam part 7, respectively, extend to the groove surface 20a of the pulley. These two V-belts are subjected to a high-speed durability test so that an elongation of each V-belt and an wear amount of the block are measured after the V-belts are each run for 500 hours. In addition, changes in generated tension, noise level and belt temperature are measured during 500 hours running.

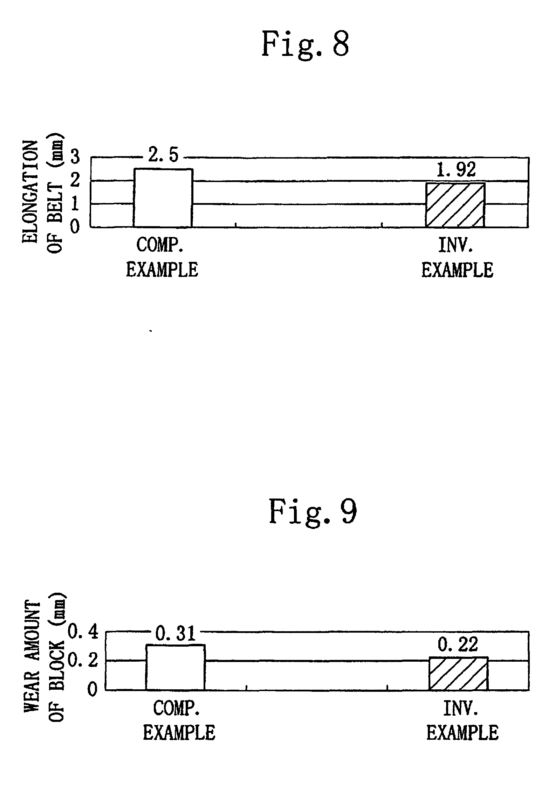

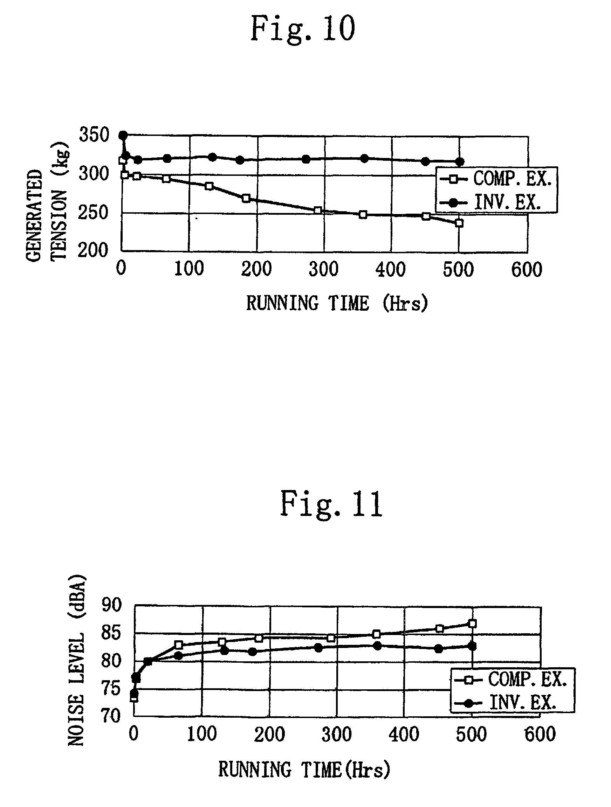

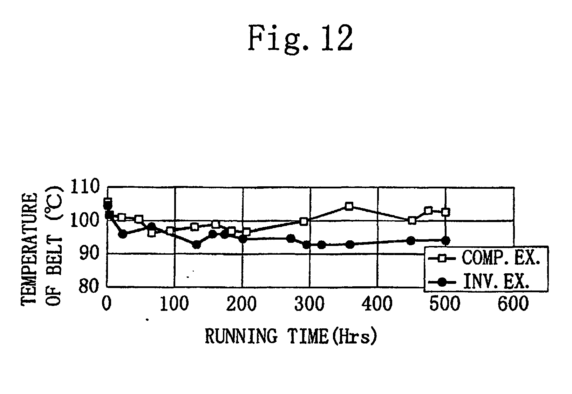

The test results are shown in Figs. 8 to 12. As seen from Figs. 8 to 12, the V-belt B of Invention Example is smaller in belt elongation and wear amount of block after the durability test than Comparative Example. Noise level and belt temperature are stable at a small value and generated tension is substantially constant at a large value. Accordingly, it can be recognised that changes over time of belt characteristics of the V-belt B of present Invention Example are suppressed through the provision of the projections 17.

Next, wear of both the projections 17, 17 of the V-belt B of the Invention Example are forcedly accelerated so that both the projections 17, 17 are worn away. At this time, changes in noise level of both the projections 17, 17 are measured before and after the projections 17, 17 are worn away. As a result, noise level after both the projections 17, 17 are worn away is increased by about 5 dB as compared with that before the projections 17, 17 are worn away, so that the change in belt sound can be recognised by listening it. Accordingly, when the height H of each projection 17 is adjusted such that the projection 17 is worn away immediately before the life time of the belt B, it can be readily judged from the change in noise that the V-belt B reaches its life time.

**Claims**

1. A V-belt (B) for high load transmission which comprises a plurality of endless load carriers (1) and a large number of blocks (5), each block (5) having: a centre pillar (8) at a middle part in a beltwidthwise direction; a plurality of fitting parts (10) on both sides of the centre pillar (8) for fitting the load carriers (1) therein; contact parts (11) on both side surfaces for coming into contact with corresponding surfaces (20a) of a pulley groove; a reinforcing member (16) at a middle part in a beitlengthwise direction of each block (5) and a resin material layer (13) formed on the surface of each block (5); **characterised in that**

   each of the blocks (5) has a concave (18) formed on a pitch line (22) of the belt (B) and in the middle of one surface of the centre pillar (8) and a convex (19) formed on the other surface of the centre pillar (8) so as to be fittable in the concave (18) of the adjacent block (5),

   the concave (18) being formed only in the resin material layer (13) and having the shape of a truncated half sphere of which the diameter is decreased toward the bottom of the concave (18),

   the convex (19) being formed in the resin material layer (13) and having the shape of a truncated half sphere of which the diameter is decreased toward the top of the convex (19), and

   an inclined surface (20) which is formed at a part of the top surface of the convex (19) from the pitch line (22) toward an inner face of the belt (B) so that an amount of projection of the convex (19) from the surrounding of the convex (19) is decreased toward the inner face of the belt (B).

2. A V-belt (B) for high load transmission which comprises a plurality of endless load carriers (1) and a large number of blocks (5), each block (5) having: a centre pillar (8) at a middle part in a beltwidthwise direction; a plurality of fitting parts (10) on both sides of the centre pillar (8) for fitting the load carriers (1) therein; contact parts (11) on both side surfaces for coming into contact with corresponding surfaces (20a) of a pulley groove; a reinforcing member (16) at a middle part in a beltlengthwise direction of each block (5) and a resin material layer (13) formed on the surface of each block (5); **characterised in that**

   each of the blocks (5) has a concave (18) formed on a pitch line (22) of the belt (B) and in the middle of one surface of the centre pillar (8) and a convex (19) formed on the other surface of the centre pillar (8) so as to be fittable in the concave (18) of the adjacent block (5),

   the concave (18) being formed only in the resin material layer (13) and having the shape of a truncated cone of which the diameter is decreased toward the bottom of the concave (18),

   the convex (19) being formed in the resin material layer (13) and having the shape of a truncated cone of which the diameter is decreased toward the top of the convex (19), and

   an inclined surface (20) which is formed at a part of the top surface of the convex (19) from the pitch line (22) toward an inner face of the belt (B) so that an amount of projection of the convex (19) from the surrounding of the convex (19) is decreased toward the inner face of the belt (B).

3. A V-belt (B) for high load transmission according to claim 1 or claim 2, **characterised in that** the resin material layer (13) is made of high-strength lubricative resin material.

**Patentansprüche**

1. Keilriemen (B) für eine Schwerlast-Transmission, der eine Vielzahl von Endlos-Lastträgern (1) und eine große Anzahl von Blöcken (5) aufweist, wobei jeder Block (5) einen mittigen Ständer (8) an einer mittleren Stelle in der Richtung einer Breite des Riemens aufweist; eine Vielzahl von Passteilen (10) an beiden Seiten des mittigen Ständers (8) für ein Einpassen der Lastträger (1); Berührungsteile (11) an beiden Seitenflächen für eine Berührung mit entsprechenden Flächen (20a) einer Rille einer Riemenscheibe; ein Verstärkungskörper (16) an einem mittleren Teil jedes Blockes (5) in der Richtung einer Breite des Riemens und eine Schicht (13) eines Plastikmaterials, die auf der Oberfläche jedes Blockes (5) ausgebildet ist; **dadurch gekennzeichnet, dass**

   jeder der Blöcke (5) eine konkave Aussparung (18) aufweist, die an einer Teillinie (22) des Riemens (B) und in der Mitte einer Fläche des mittigen Ständers (8) ausgebildet ist, und eine konvexe Erhebung (19), die an der anderen Fläche des mittigen Ständers (8) für ein Einpassen in die konkave Aussparung (18) des nächsten Blockes (5) ausgebildet ist, wobei

   die konkave Aussparung (18) nur in der Schicht (13) des Plastikmaterials ausgebildet ist und die Form einer schräg abgeschnittenen Halbkugel aufweist, deren Durchmesser gegen den Boden der konkaven Aussparung (18) hin abnimmt,

   die konvexe Erhebung (19) in der Schicht (13) des Plastikmaterials ausgebildet ist und die Form einer schräg abgeschnittenen Halbkugel aufweist, deren Durchmesser gegen die Kuppe der konvexen Erhebung (19) hin abnimmt, und

   eine geneigte Fläche (20), die an einem Teil der oberen Fläche der konvexen Erhebung (19) von der Teillinie (22) gegen eine Innenfläche des Riemens (B) ausgebildet ist, sodass ein Anteil der Projektion der konvexen Erhebung (19) über die Umgebung der konvexen Erhebung (19) gegen die Innenfläche des Riemens (B) abnimmt.

2. Keilriemen (B) für eine Schwerlast-Transmission, der eine Vielzahl von Endlos-Lastträgern (1) und eine große Anzahl von Blöcken (5) aufweist, wobei jeder Block (5) einen mittigen Ständer (8) an einer mittleren Stelle in der Richtung einer Breite des Riemens aufweist; eine Vielzahl von Passteilen (10) an beiden Seiten des mittigen Ständers (8) für ein Einpassen der Lastträger (1); Berührungsteile (11) an beiden Seitenflächen für eine Berührung mit entsprechenden Flächen (20a) einer Rille einer Riemenscheibe; ein Verstärkungskörper (16) an einem mittleren Teil jedes Blockes (5) in der Richtung einer Breite des Riemens und eine Schicht (13) eines Plastikmaterials, die auf der Oberfläche jedes Blockes (5) ausgebildet ist; **dadurch gekennzeichnet, dass**

   jeder der Blöcke (5) eine konkave Aussparung (18) aufweist, die an einer Teillinie (22) des Riemens (B) und in der Mitte einer Fläche des mittigen Ständers (8) ausgebildet ist, und eine konvexe Erhebung (19), die an der anderen Fläche des mittigen Ständers (8) für ein Einpassen in die konkave Aussparung (18) des nächsten Blockes (5) ausgebildet ist, wobei

   die konkave Aussparung (18) nur in der Schicht (13) des Plastikmaterials ausgebildet ist und die Form eines Kegelstumpfes aufweist, dessen Durchmesser gegen den Boden der konkaven Aussparung (18) hin abnimmt,

   die konvexe Erhebung (19) in der Schicht (13) des Plastikmaterials ausgebildet ist und die Form eines Kegelstumpfes aufweist, dessen Durchmesser gegen die Kuppe der konvexen Erhebung (19) hin abnimmt, und

   eine geneigte Fläche (20), die an einem Teil der oberen Fläche der konvexen Erhebung (19) von der Teillinie (22) gegen eine Innenfläche des Riemens (B) ausgebildet ist, sodass ein Anteil der Projektion der konvexen Erhebung (19) über die Umgebung der konvexen Erhebung (19) gegen die Innenfläche des Riemens (B) abnimmt.

3. Keilriemen (B) für eine Schwerlast-Transmission nach Anspruch 1 oder Anspruch 2, **dadurch gekennzeichnet, dass** die Schicht (13) des Plastikmaterials aus einem bruchfesten, gleitfähigen Plastikmaterial besteht.

**Revendications**

1. Courroie trapézoïdale (B) pour la transmission de grandes charges, qui comprend une pluralité de porteurs de charge sans fin (1) et un grand nombre de clocs (5), dont chacun comprend : un longeron central (8) à une partie centrale en sens transversal de la courroie ; une pluralité d'éléments de montage (10) aux deux côtés dudit longeron central (8) pour le montage desdits porteurs de charge (1) dans le longeron ; des éléments de contact (11) aux deux surfaces latérales afin de contacter des surfaces correspondantes (20a) d'une rainure de poulie ; un élément de renforcement (16) à une partie centrale de chaque bloc (5) en sens longitudinal de la courroie, et une couche (13) en matériau résineux, qui est formée sur la surface de chaque bloc (5), **caractérisée en ce que** chacun desdits blocs (5) présente une zone concave (18) formée sur une ligne de roulement (22) de la courroie (B) et au centre d'une surface dudit longeron central (8), ainsi qu'une zone convexe (19) formée dans la surface extérieure dudit longeron central (8) de manière, qu'on puisse l'encastrer dans la zone concave (18) du bloc adjacent (5),

ladite zone concave n'étant formée que dans ladite couche (13) en matériau résineux, en ayant la forme d'un hémisphère tronqué, dont le diamètre décroît vers le fond de ladite zone concave (18),

ladite zone convexe (19) étant formée dans ladite couche (13) en matériau résineux, en ayant la forme d'un hémisphère tronqué, dont le diamètre décroît vers la partie supérieure de ladite zone convexe (19), et

en ce qu'une surface inclinée (20) est disposée, qui est formée en tant que partie de la surface supérieure de ladite convexe (19) à partir de ladite ligne de roulement (22) vers une face intérieure de la courroie (B) de façon, qu'une valeur de saillie de ladite zone convexe (19) décroisse à partir des environs de ladite zone (19) vers la face intérieure de la courroie (B).

2. Courroie trapézoïdale (B) pour la transmission de grandes charges, qui comprend une pluralité de porteurs de charge sans fin (1) et un grand nombre de clocs (5), dont chacun comprend : un longeron central (8) à une partie centrale en sens transversal de la courroie ; une pluralité d'éléments de montage (10) aux deux côtés dudit longeron central (8) pour le montage desdits porteurs de charge (1) dans le longeron ; des éléments de contact (11) aux deux surfaces latérales afin de contacter des surfaces correspondantes (20a) d'une rainure de poulie ; un élément de renforcement (16) à une partie centrale de chaque bloc (5) en sens longitudinal de la courroie, et une couche (13) en matériau résineux, qui est formée sur la surface de chaque bloc (5), **caractérisée en ce que** chacun desdits blocs (5) présente une zone concave (18) formée sur une ligne de roulement (22) de la courroie (B) et au centre d'une surface dudit longeron central (8), ainsi qu'une zone convexe (19) formée dans la surface extérieure dudit longeron central (8) de manière, qu'on puisse l'encastrer dans la zone concave (18) du bloc adjacent (5),

ladite zone concave n'étant formée que dans ladite couche (13) en matériau résineux, en ayant la forme d'un cône tronqué, dont le diamètre décroît vers le fond de ladite zone concave (18),

ladite zone convexe (19) étant formée dans ladite couche (13) en matériau résineux, en ayant la forme d'un cône tronqué, dont le diamètre décroît vers la partie supérieure de ladite zone convexe (19), et

en ce qu'une surface inclinée (20) est disposée, qui est formée en tant que partie de la surface supérieure de ladite convexe (19) à partir de ladite ligne de roulement (22) vers une face intérieure de la courroie (B) de façon, qu'une valeur de saillie de ladite zone convexe (19) décroisse à partir des environs de ladite zone (19) vers la face intérieure de la courroie (B).

3. Courroie trapézoïdale (B) pour la transmission de grandes charges selon la revendication 1 ou 2, **caractérisée en ce que** ladite couche en matériau résineux (13) est fait d'une matière synthétique lubrifiante à résistance élevée.

# Fig. 1

# Fig. 2

# Fig. 3

Fig. 4

# Fig. 5

# Fig. 6

# Fig. 7

<u>B</u>

## Fig. 8

Elongation of belt bar chart. COMP. EXAMPLE: 2.5; INV. EXAMPLE: 1.92. Y-axis: ELONGATION OF BELT (mm).

## Fig. 9

Wear amount of block bar chart. COMP. EXAMPLE: 0.31; INV. EXAMPLE: 0.22. Y-axis: WEAR AMOUNT OF BLOCK (mm).

# Fig. 10

# Fig. 11

# Fig. 12